# EUROPEAN PATENT SPECIFICATION

(11) **EP 4 175 811 B1**
(45) Date of publication and mention of the grant of the patent: **16.10.2024**
(21) Application number: 21739685.2
(22) Date of filing: 06.07.2021
(51) Int. Cl.: B29C 45/17, B29C 45/26, B29C 33/30

(54) **MAIN GUIDE RAIL WITH INTERNAL TRACK**
HAUPTFÜHRUNGSSCHIENE MIT INNENSCHIENE
RAIL DE GUIDAGE PRINCIPAL À PISTE INTERNE

(30) Priority: 06.07.2020 DK PA202070463
(43) Date of publication of application: 10.05.2023
(73) Proprietor: LEGO A/S, 7190 Billund (DK)
(72) Inventor: LAMBÆK, Jens Stamp, 7190 Billund (DK)
(74) Representative: Guardian IP Consulting I/S
(86) International application number: PCT/EP2021/068649
(87) International publication number: WO 2022/008504

(56) References cited:
- WO-A1-2007/039767
- CN-U- 203 937 071
- DE-A1- 102006 046 528
- DE-U1- 202018 107 023
- GB-A- 2 283 936
- JP-A- S 543 155
- US-A- 4 718 845
- US-A- 4 884 962

## Description

The present invention relates to main guide rails for mould boxes for injection moulding machines used in injection moulding processes

### Background of the invention

In the field of injection moulding machines, having an injection unit and a clamping unit for operating a mould box, the mould box typically comprises two mould plates (also called half plates) arranged moveably relative to each other and guided by a set of guide rail, which is hereinafter referred to as main guide rails, main guide rail pillars, main guide rail system or main guide rail pillar system to distinguish from any other guide mechanisms of injection moulding systems. The clamping unit further comprises a linear drive mechanism for pressing at least one of the mould plates against one or more other mould plates, during injection of molten plastic performed by the injection unit. The main guide rails are configured for supporting the mould plates, while the linear drive mechanism presses the plates together and when the mould plates are moved towards each other or away from each other.

Typically, one mould-plate is fixed relative to a frame of the injection moulding machine. In typical injection moulding machines , one or more mould plates is/are slideable along the set of main guide rails, which may also be referred to as main guide rail pillars. The moveable mould plates are commonly slideably translatable on four cylindrical guide rails arranged in parallel and intersecting the four corners of the square or rectangular mould plates. An actuator/linear drive mechanism drives the sliding of moveable mould-plate(s) along the set of guide rails, between a position, where the mould-plates closes to form a mould, and a position, where the mould-plates are separated from each other, so that a moulded item may be removed from the mould box.

The use of a set of four cylindrical main guide rail pillars provides for making a very stable construction. It is however a disadvantage that such mould box constructions are very complicated and expensive to manufacture due to the high precision needed for making the mould-plates slide on the set of parallel guide rail pillars, driving tight tolerance demands. Further, during use, mould boxes are subject to uneven temperature distribution, causing uneven wear on the mould box parts. It is also a problem that the guide rails makes it difficult to design for auxiliary functions for example ejection pins, extraction arms etc.

In the mould boxes of clamping unit of some injection moulding machines, in order to secure correct alignment of the mould plates, when the mould plates are moved together, in addition to the main guide rail pillars, it is known to provide an additional alignment or positioning system. Such as system may for example comprise a conical protrusion extending from one mould plate and a complementary conical indention formed in the opposing mould plate. When the mould plates are mowed towards each other, the interacting conical surfaces will align the mould plates. It is also known in the art, that such alignment systems comprises mating parts of other shapes. The German utility model, DE 2020 18 107 023 U1 discloses an example where the alignment system shows to beams of rectangular cross section. CN203937071 U discloses a locating device of a refrigerator pull plate mould. The locating device comprises a base and a locating cover plate, wherein a first plum-blossom-shaped locating hole is formed in the centre of the locating cover plate; second square locating holes are respectively formed in two sides of the first locating hole; a plum-blossom-shaped locating cylinder is arranged in the centre of the base; square locating strips are respectively arranged on two sides of the locating cylinder; the locating cylinder is matched with the first locating hole; and the square locating strips are matched with the second locating holes. According to the utility model, the plum-blossom-shaped locating cylinder is matched with the first plum-blossom-shaped locating hole; simultaneously, the square locating strips are matched with the second locating holes, and therefore, the locating precision of the mould is greatly increased; the precision and the reliability of a plastic part of a pull plate are also greatly increased; and the locating device of the refrigerator pull plate mould disclosed by the utility model is simple in structure, convenient to correct and high in practicability. DE102006046528 discloses that each mold half is associated with an adapter plate (10, 12). This is fastened in turn, to the respective mold clamping platen. Detachable clamps (56, 56') are fitted between the cavity mold (20) and the adapter plate (12) which carries it, and between the core plate (18) and the adapter plate (10) which carries it. They are fitted to the core (if used). The detachable clamps form connectors between the respective components. Couplings are included for connecting lines, the injection nozzle and the hot channel. Detachable connections are provided for drives actuating slides and/or ejectors. The arrangement of all connectors is such that, after releasing clamps, contour elements (i.e. mold and/or core) can be withdrawn from the adapter plates, hot channel and if appropriate, the core plate. The mold components (20, 22) fitted to at least one of the adaptor plates, can then be slid on guides (44, 46) in the direction of opening and closure. Through connections to their drive units, the adapter plates are brought sufficiently far apart to allow them to be lifted up from the guides, to permit mold exchange. Further mechanical details of the arrangement are described in accordance with the foregoing principles. An independent claim IS INCLUDED FOR the method of mold replacement. JPS543155 discloses mold plate body on both sides of the plate body respectively to the coalesced sealed to form together with the molding cavity plate body outer and the molding die having a plate member is at a click and a passage open to the surface other, the passage from the opening provided in the branch and a branch passage, the branch passage having therein said cavity from the gate, on the other hand, leading to one end of the sprue is made and closed, the other end portion of the passage tightly fitted so as to slide the shaft has been runner shaft provided in the other end of the opening of the discharge port the branch "n are respectively provided, characterized in that if a molding die. GB2283936A discloses a runner plate for an injection molding system comprises a plate typically having a plurality of corners, and typically apertures extending through the plate for receiving leader pins of the molding system for support of the plate in the molding system. Also at least a pair of outrigger supports may be provided, the outrigger supports being carried by the plate, each at a different position on the plate, and typically extending diagonally outwardly relative to adjacent plate edges. Also the outrigger support may carry rollers which are positioned to engage tie bars of the mold press for rolling contact therewith and support of the system. A mold which contains the runner plate may, by this invention, have leader pins that are longer than corresponding pins of the prior art, extending through the entire mold from, typically, the mold core on one side of the mold to a mold core on the other side of the mold, in the case of double action molds, with the leader pins being long enough to extend through the entire mold even in the open position, for added support. In such a circumstance, the outrigger supports may be dispensed with. US4718845A discloses, in a stack mold comprising a center mold part, first and second outside mold parts moveable at both sides of the center mold part, a rack and pinion gear arrangement to move the outside mold parts. The rack and pinion gear arrangement comprises a plurality of pinion gears located at the center mold part and including a drive gear and first and second follower gears driven off the drive gear. Also provided are first and second free ended racks extending in opposite directions from the first and second outside mold parts respectively in engagement with the first and second follower gears. These follower gears reach above and below the drive gear and the first follower gear is offset to the side of the drive gear opposite that to which the free end of the first rack extends while the second follower gear is offset to the side of the drive gear opposite that to which the free end of the second rack extends.

### Summary of the invention

It is therefore an object of the invention to solve the disadvantages of the prior art systems, and to increase the variety of options.

In a first aspect the objects of the invention are achieved by a mould box for an injection moulding machine, the mould box comprising
- a first mould plate;
- a second mould plate movably arranged relative to the first mould plate along a longitudinal axis; and
- a main guide rail system configured for guiding at least the second mould plate linearly away from and towards the first mould plate,

wherein the main guide rail system comprises a main guide rail pillar having a cross section perpendicular to the longitudinal axis,
wherein the cross-section is rectangular,
wherein the main guide rail pillar extends through a third opening through a bearing arranged between the main guide rail pillar and the second mould plate;
wherein a guide track is formed as an elongate indention in a sidewall of the main guide rail pillar and comprising a first internal guide surface; and
wherein a protruding bearing element extends from the third opening formed through the bearing and into the guide track, and forming a bearing contact against the first guide surface of the guide track.

In an embodiment the rectangular shape of the main guide rail pillar is oriented such that a longer side of the rectangular shape extends vertically and a shorter side of the rectangular shape extends horizontally.

In a further embodiment, the guide track is formed in a sidewall of the main guide rail pillar which is a longer side of the rectangular shape of the cross-section of the main guide rail.

In either of the previously disclosed embodiments, the protruding bearing element may further have a length which is longer than a thickness of the second mould plate.

This will allow to increase the stiffness of the connection between the main guide rail pillar and the second mould plate along the longitudinal axis of the main guide rail pillar, and to thereby counteract torsion/rotation about an axis perpendicular to the longitudinal axis. Thereby, the risk of locking between the second mould plate and the main guide rail pillar is considerably reduced.

In embodiments hereof, the length of the protruding bearing element 0.5 to 3 times the thickness of the second mould plate

Preferably, the length of the protruding bearing element is twice the thickness of the second mould plate.

In further embodiments, the protruding bearing element comprises a first roller bearing configured for rolling on said first internal guide surface of the guide track.

The first roller bearing may comprise on or more rollers, for example in the form of wheels, cylinders, balls, caterpillars or the like.

Preferably, the first internal guide surface of the guide track and the first roller bearing cooperating therewith are arranged horizontally. Thereby, the first internal guide surface of the guide track and the first roller bearing may support the vertical forces on the second main guide rail pillar from the mould plate.

In some embodiments, the protruding bearing element may further comprise a second roller bearing configured for rolling on a second internal guide surface of the guide track, wherein the second internal guide surface of the guide track is opposite to and facing the first internal guide surface of the guide track. The second roller bearing may - as the first roller bearing - comprise on or more rollers, for example in the form of wheels, cylinders, balls, caterpillars or the like.

Alternatively to the above mentioned embodiments comprising a roller bearing connection, the protruding bearing element may comprise a first external bearing surface configured for sliding against said first internal guide surface of the guide track.

Preferably, the first internal guide surface 71 of the guide track 70 and the first external bearing surface 61 are horizontally arranged. Thereby, the first internal guide surface of the guide track and the first external bearing surface may carry the vertical forces on the second mould plate.

In a further embodiment, the guide track comprises at least a second internal guide surface arranged opposite to and facing the first internal guide surface; and wherein the protruding bearing element comprises a second external bearing surface configured for sliding against said second internal guide surface of the guide track.

This provides an additional bearing contact between the main guide rail pillar and the second mould plate 30, and prevents movement between the two in the vertical direction.

In further embodiments, the bearing further comprises a first internal bearing component arranged in the third opening through the bearing, wherein the first internal bearing component is configured to cooperate with one planar guide surface of the main guide rail pillar.

Thereby an additional bearing to the bearing between the internal guide track and the protruding bearing element is provided.

In a preferred embodiment thereof, at least the first internal bearing component of the bearing cooperates with a first planar guide surface, which is arranged perpendicular to the first guide surface of the guide track. Thereby the bearing provides support in the horizontal plane perpendicular to the longitudinal direction.

In a further embodiment, the first internal bearing component comprises a first internal bearing surface configured for sliding against the planar guide surface of the main guide rail pillar. Alternatively, the first internal bearing component may comprise a roller bearing connection.

In a further embodiment the bearing further comprises a second internal bearing component arranged in the third opening through the bearing, wherein the second internal bearing component is configured to cooperate with another one of the planar guide surfaces of the main guide rail pillar, which is also perpendicular to the first guide surface of the guide track and wherein the second internal bearing component is opposite to and facing the first internal bearing component. Thereby, the main guide rail pillar is prevented against horizontal movement perpendicularly to the direction of the longitudinal axis.

In a further embodiment, the second internal bearing component comprises a second internal bearing surface configured for sliding against the second planar guide surface of the main guide rail pillar. Alternatively, the second internal bearing component may comprise a roller bearing connection.

In a further embodiment, the bearing comprises a third internal bearing component arranged in the third opening through the bearing, wherein the third internal bearing component is configured to cooperate with another one of the planar guide surfaces of the main guide rail pillar, which is parallel to the first guide surface of the guide track. This may support the bearing between the main guide rail pillar and the second mould plate in the same direction as the bearing contact between the protruding bearing element and the first guide surface of the guide track.

In a further embodiment, the third internal bearing component comprises a third internal bearing surface configured for sliding against the third planar guide surface of the main guide rail pillar. Alternatively, the third internal bearing component may comprise a roller bearing connection.

In a further embodiment, the bearing may additionally comprise a fourth internal bearing component arranged in the third opening through the bearing, wherein the fourth internal bearing component is configured to cooperate with a fourth planar guide surfaces of the main guide rail pillar, which is parallel to the third planar guide surfaces and facing in the opposite direction thereto. This may prevent movement between the main guide rail pillar and the second mould plate in the same direction as the bearing contact between the protruding bearing element and the first guide surface of the guide track.

In a further embodiment thereof, the fourth internal bearing component comprises a fourth internal bearing surface configured for sliding against the fourth planar guide surface of the main guide rail pillar. Alternatively, the fourth internal bearing component may comprise a roller bearing connection.

In a further embodiment, the main guide rail system of the mould box may comprise a first main guide rail pillar, and second main guide rail pillar, and wherein each of the first and second main guide rail pillars has a rectangular cross section perpendicular to the longitudinal axis. In a further embodiment hereof, the first main guide rail pillar extends through an opening in the second mould plate, where said opening through the second mould plate is formed centrally adjacent to an upper edge of the second mould plate, and wherein the second main guide rail pillar extends through another opening in the second mould plate, which opening is formed centrally adjacent to a lower edge of the second mould plate.

However, the main guide rail system of the mould box may alternatively comprise a single main guide rail pillar only. In this case, preferably, the single main guide rail pillar extends through a second opening in the second mould plate, which said opening through the second mould plate is formed centrally in the second mould plate.

In a second aspect the objects of the invention are achieved by an injection moulding machine comprising a mould box according to the first aspect of the invention.

More particularly, in the second aspect, the objects of the invention are achieved by an injection moulding machine comprising
- a mount;
- a mould box according to any one of the embodiments described in respect to the first aspect of the invention above;
- a linear drive mechanism for moving the second mould plate; and
- an injection part,
wherein the second mould plate is movably arranged relative to the first mould plate, and driven by the linear drive mechanism.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1 schematically shows an outline of a prior art injection moulding machine;
Fig. 2, in a perspective view, shows components of a prior art mould box with two half-plates and a set of cylindrical main guide rails;
Fig.3A, in a perspective view, shows a mould box with a single centrally arranged rectangular main guide rail pillar;
Fig. 3B, in a front view, shows the mould box of Fig. 3A;
Fig. 3C, in a sectional side view, shows the mould box of Figs. 3A and 3B;
Fig. 4A, in a perspective view, shows the mould box of Figs. 3A-C in a second position;
Fig. 4B, in a front view, shows the mould box of Fig. 4A;
Fig. 4C, in a sectional side view, shows the mould box of Figs. 4A and 4B;
Fig. 5, in an exploded perspective view, shows the mould box of Figs. 3A-C and 4A-C;
Fig. 6, in a perspective view, shows a mould box with a single rectangular main guide rail pillar, where the main guide rail pillar is offset relative to the center of the half-plates of the mould box;
Fig. 7, in a perspective view, shows a mould box according to yet another embodiment of the invention;
Fig. 8A, in a perspective view, shows a portion of a bearing and a half plate and a portion of a main guide rail pillar with an internal track according to one embodiment of the invention;
Fig. 8B, in a perspective view, shows the portion of a bearing and a half plate and a portion of a main guide rail pillar with an internal track according of Fig. 8A, in a situation where the bearing and main guide rail pillar are separated from each other;
Fig. 9A, in a perspective view, shows the bearing, half plate and main guide rail pillar with an internal track of Figs. 8A-B, seen from a different viewpoint;
Fig. 9B, in a perspective view, shows the portion of a bearing and a half plate and a portion of a main guide rail pillar with an internal track according of Fig. 9A, in a situation where the bearing and main guide rail pillar are separated from each other;
Fig. 10, in a schematic side view shows, a portion of a half plate and main guide rail pillar with an internal track according to one embodiment of the invention;
Fig. 11 shows the half plate and main guide rail pillar with an internal track of Fig. 10 in a section through the main guide rail pillar perpendicular to it's longitudinal axis;
Fig. 12, in a perspective view, shows a mould with half plates and a rectangular main guide rail pillar with an internal track according to another embodiment of the invention;
Fig. 13, in front view, shows another embodiment of the connection between a mold plate and a rectangular main guide rail pillar with an internal track; and
Fig. 14 shows a principal sketch of a prior art bearing running on a main guide rail pillar to illustrate a locking effect.

### Detailed description of the embodiments

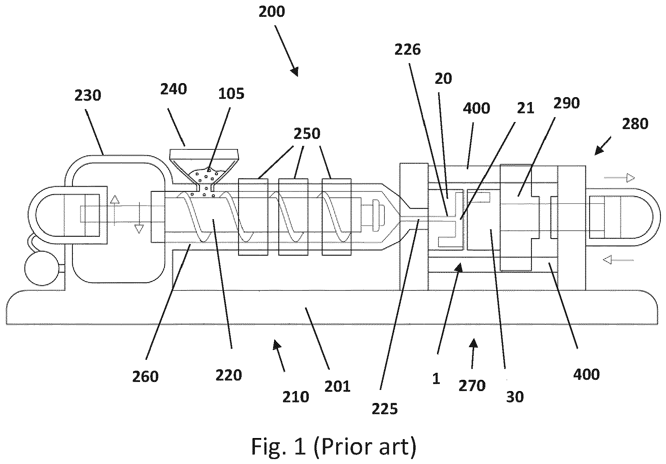

Fig. 1 illustrates schematically an injection moulding machine 200 as known in the art. The injection moulding machine 200 generally comprises an injection part 210, shown in the left side of the figure, and a clamping part 270, shown in the right side of the figure. The injection part 210 handles injection of plastic material into a mould formed in the clamping part 270 of the injection moulding machine 200. The injection part 210 and the clamping part 270 of the injection moulding machine 200 are attachable to a mount 201.

Injection moulding machines 200 generally works in the following way: Plastic granules 105 are fed into the barrel 260 of a reciprocating screw 220 of the injection part 210 via a hopper 240. The reciprocating screw 220 is driven by a drive mechanism 230, such as an electrical motor. The plastic granules 105 fed through the hopper 240 are then transported towards the clamping part 270 by the reciprocal screw, while being compacted and they are heated by heating devices 250 surrounding the reciprocating screw 220, until they melt and reach a suitable viscosity at a nozzle 225 at the entrance to the clamping part 270 with the mould. The mould is formed in a mould box 1.

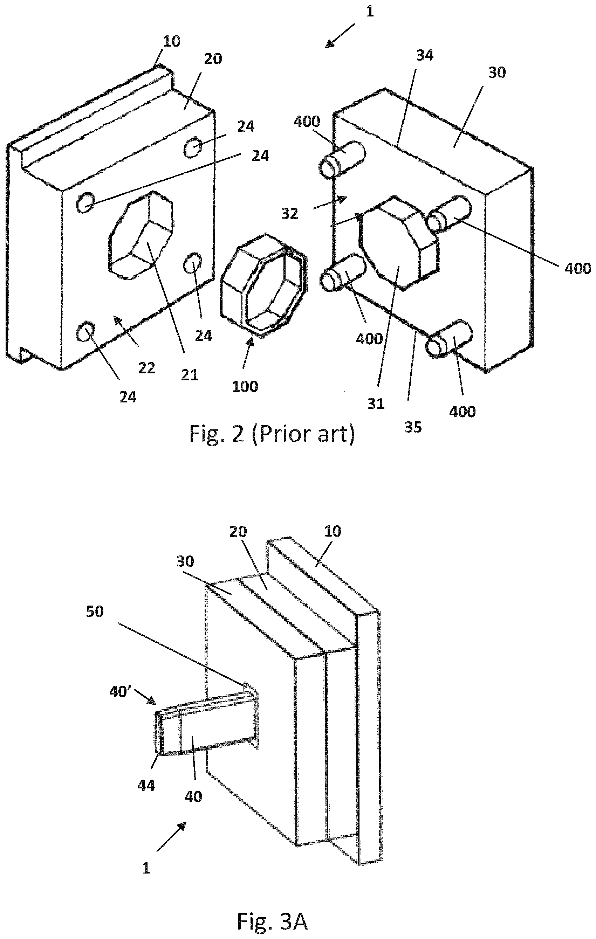

The fluid plastic material is fed from the nozzle 225 through sprue channels 226 in a base plate 10 of the mould box 1, and reaches a mould cavity 21 formed in a first mould plate 20 of the mould box 1. The first mould plate 20 of the mould box 1 is connected to the base plate 10. The base plate 10 is connected to the mount 201. A second mould plate 30 of the mould box 1, which may comprise a mould core and/or further portions of a mould cavity is arranged moveably relative to the first mould plate 20, such that the mould box may be completely closed (clamped together) to allow injection of the melted plastic, and such that the mould box 1 may be opened to extract a moulded object 100 (see Fig. 2). The first mould plate 20 and the second mould plate 30 of a mould box 1 may also be referred to as half plates. Thus, the first mould plate 20 of a mould box 1 may also be referred to as a first half plate, and the second mould plate 30 of a mould box 1, may also be referred to as a second mould plate.

In Fig. 1 the second mould plate 30 is attached to a moveable platen 290. The moveable platen 290 - and thereby the second mould plate 30 - is slideably arranged on a set of cylindrical main guide rails 400. Typically, the clamping part 270 of injection moulding machines 200 comprises four cylindrical main guide rails 400 for guiding the movement of the moveable platen 290 with the second mould plate 30. The movement of the moveable platen 290 with the second mould plate 30 is performed by a linear drive mechanism 280, typically a hydraulic mechanism.

The moveable platen 290 with the second mould plate 30 comprises through-going slide bearings, slidably receiving the cylindrical main guide rails 400.

In an injection process, the linear drive mechanism 280 clamps the first mould plate 20 and the second mould plate 30 together, whereupon plastic is injected from the reciprocal screw 220 through the nozzle 225 and into the mould cavity 21. When the plastic has filled the mould cavity 21 completely, and has cooled sufficiently for the plastic to be in solid state, then the linear drive mechanism 280 moves the second mould plate 30 away from the first mould plate 20, and the moulded object is ejected from the mould cavity 21 in the first mould plate 20. The ejection of the moulded object 100 is typically done by ejector pins (not shown) formed in/through the base plate 10.

Fig. 2 shows a prior art mould box 1 for an injection moulding machine 200 (as outlined in Fig. 1), and a moulded object 100. The mould box 1 is shown in a separated state where the moulded object 100 is visible between two half plates, or mould plates 20, 30 of the mould box 1. Thus, the he mould box 1 comprises two mould plates 20, 30. A first mould plate 20, here shown to comprise a mould cavity 21 of a mould, is connected to a base plate 10 of the mould box 1. The first mould plate 20 and the base plate 10 may form one integrated part, or they may be formed as separate parts and joined subsequently by suitable means, e.g. bolts. A mould cavity 21 is formed as a depression in a surface of the first mould plate 20.

The first mould plate 20 is - via the base plate 10 -connected to an injection moulding machine 200, e.g. as described above. The base plate 10 may thus be connected to a mount 201 as shown in Fig. 1.

A second mould plate 30 is moveably arranged relative to the first mould plate 20 and the injection moulding machine 200. The second mould plate 30 is slideably arranged on a set of cylindrical main guide rails 400 of a main guide rail system configured for guiding the second mould plate 30 linearly away from and towards the first mould plate 20.

The set of cylindrical main guide rails 400 comprises four cylindrical main guide rails 400. The cylindrical main guide rails 400 are arranged to slide over bearings (not shown) provided through the second mould plate 30, or through a moveable platen 290 to which the second mould plate 30 is mounted. In Fig. 2 only a portion of the cylindrical main guide rails 400 is seen.

The cylindrical main guide rails 400 are fixedly secured in the openings 24 provided in the first mould plate 20. There is one opening 24 per main guide rail 400.

In Fig. 2 the main guide rails extend through the second mould plate 30 itself, as opposed to the version shown in Fig. 1, where the second mould plate 30 is connected to a moveable platen 290, which has bearings for the cylindrical main guide rails 400.

The second mould plate 30 is shown with a core 31 configured for mating with the mould cavity 21 in the first mould plate 20 to form a shape corresponding to the moulded object 100.

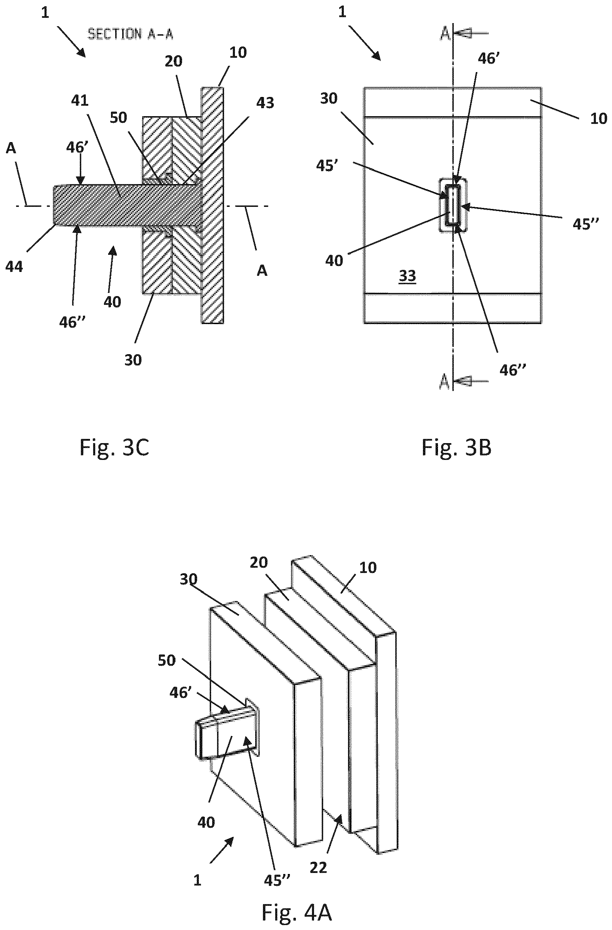

Figs. 3-5 show a mould box 1 having a single, centrally arranged, rectangular cross section main guide rail pillar 40, instead of the set of cylindrical main guide rails 400 shown in Figs. 1 and 2. The present invention relates to such a rectangular cross-section main guide rail pillar 40, which will first be described in the following, before the invention is described in detail further below.

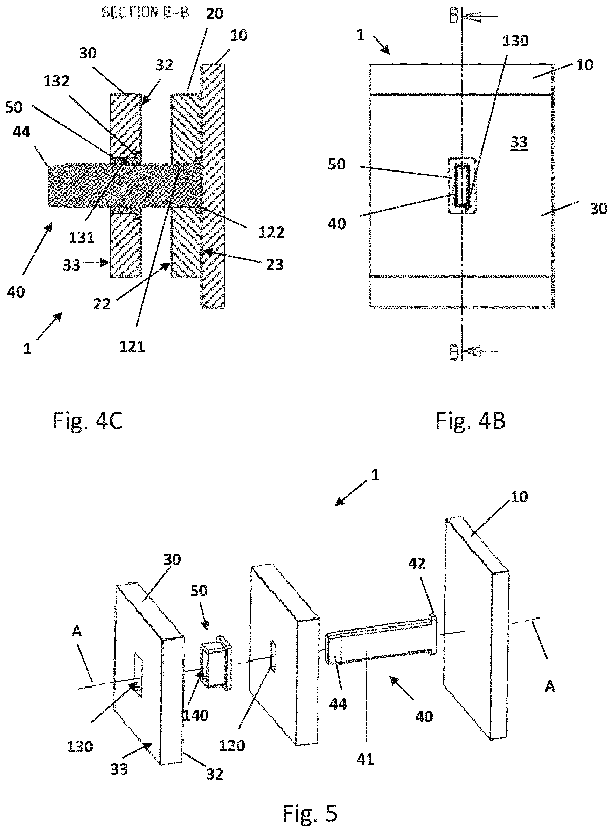

The mould box 1 comprises a base plate 10 and a first mould plate 20 connected thereto. During use in injection moulding processes, the first mould plate 20 is fixed in position relative to the base plate 10. The base plate 10 is fixedly connectable to an injection moulding machine, e.g. as described in connection with the prior art injection moulding machine 200 shown in Fig. 1. The first mould plate 20 may comprise one or more mould cavities (not shown) formed as depressions in a first surface 22 of the first mould plate 20. An opposite side, second side 23 of the first mould plate 20 faces the base plate 10, see e.g. Fig. 5.

The first mould plate 20 may be formed integrally with the base plate 10, or it may - as shown in Figs. 3-5 - be formed as individual/separate parts and subsequently be joined/connected, such that the first mould plate 20 is fixed to the base plate 10 at least during the injection moulding process. The first mould plate 20 may be connected to the base plate 10 using for example bolts.

The not shown one or more mould cavities may - in also not shown - further embodiments be formed in one or more cassettes attachable on - or insertable in suitable recesses, e.g. in the first surface 22 of the first mould plate 20.

Further, the first mould plate 20 and or the base plate 10 may be equipped with sprue channels 226 and runner channels (not shown in Figs. 3-13) necessary to connect the one or more mould cavities in the first mould plate 20 with an injection nozzle 225 of an injection moulding machine 200, such as an injection moulding machine as shown in Fig. 1.

The mould box 1 shown in Figs. 3-5 further comprises a second mould plate 30. The second mould plate 30 is movably arranged relative to the first mould plate 20. Thereby, the second mould plate 30 is also movably arranged relative to the base plate 10.

The mould box 1 as shown in Figs. 3-5 further comprises a main guide rail system 40' configured for guiding the second mould plate 30 linearly away from and towards the first mould plate 20.

The main guide rail system 40' allows the second mould plate 30 to be movably arranged relative to the base plate 10.

In other - not shown - embodiments, the first mould plate 20 may also be movably arranged, relative to the base plate 10, the injection moulding machine 200 further comprising means for moving the first mould plate 20 on the main guide rail system 40'.

In yet other - not shown - embodiments, the mould box 1 may comprise a third plate (not shown) arranged between the first mould plate 20 and the base 10, where for example runner channels are arranged in third plate. Such a third plate may be fixed relative to the base plate 10 or it may be moveable on the main guide rail system 40' in order to facilitate de-shaping of the runner channels.

As shown in Figs. 3-5, the main guide rail system 40' comprises a single main guide rail pillar 40, only. In principle, the main guide rail system may 40' may comprise more than a single main guide rail pillar, but only one is needed.

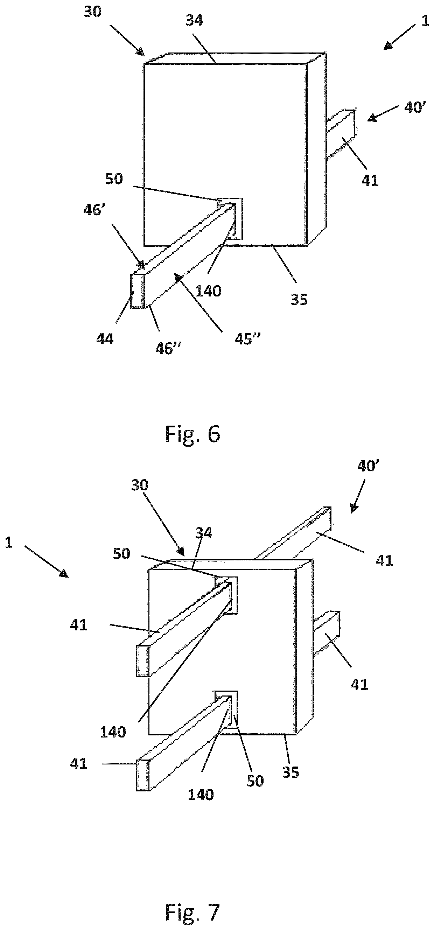

Fig. 7 illustrates an embodiment, where the mould box 1 comprises two main guide rail pillars 40, a first main guide rail pillar 40 and a second guide pillar 40. The first main guide rail pillar 40 extends through an opening 140 formed through a bearing 50 formed in the second mould plate 30. This opening 140 through the bearing 50 of the second mould plate 30 is formed adjacent to an upper edge 34 of the second mould plate 30, and centrally along this edge 34. Further, the second main guide rail pillar 40 extends through another opening 140 through a second bearing 50 formed in the second mould plate 30. This opening 140 is formed adjacent to a lower edge 35 of the second mould plate 30, and centrally along this edge 35.

Now returning to Figs 3-5, the main guide rail pillar 40 is elongate, having a first end 43 and second end 44, an elongate body part 41 extending between the first end 43 and the second end 44, and a longitudinal axis A. The main guide rail pillar 40 has a cross sectional shape perpendicular to the longitudinal axis A.

The cross-section/cross-sectional shape forms a polygon.

We note that by a polygon or polygonal shape we mean any 2-dimensional shape formed with straight lines. Triangles, quadrilaterals, pentagons, and hexagons are all examples of polygons.

There are two main types of polygon - regular and irregular. A regular polygon has equal length sides with equal angles between each side. Any other polygon is an irregular polygon, which by definition has unequal length sides and unequal angles between sides. In principle, the cross-section of the guide pillar according to the invention may have any polygonal shape.

However, as shown in Figs. 3-5, the polygonal shape may in preferred embodiments be rectangular or quadratic.

In some embodiments a longer side length of the rectangular cross section/cross-sectional shape may be arranged vertically. Thus, the rectangular shape of the main guide rail pillar 40 is oriented such that a longer side of the rectangular shape extends vertically and a shorter side of the rectangular shape extends horizontally.

In any case, each main guide rail pillar 40 having a cross-section/cross-sectional shape forming a polygon will result in the main guide rail pillar 40 having a set of planar guide surfaces 45',45", 46', 46" for cooperating with a bearing element 51 arranged on the second mould plate 30. The number of planar guide surfaces on the main guide rail pillar 40 will depend on the number of sides of the polygonal cross-section/cross-sectional shape of the main guide rail pillar 40. The main guide rail pillar 40 shown in Figs. 3-5, and 6-7 having a rectangular cross section has two wider planar guide surfaces 45', 45", and two narrower planar guide surfaces 46', 46".The two wider planar guide surfaces 45', 45" are parallel to each other and formed on opposed sides of the main guide rail pillar 40. Similarly, the two narrower planar guide surfaces 46', 46" are parallel to each other and formed on opposed sides of the main guide rail pillar 40, but perpendicular to the two wider planar guide surfaces 45', 45".

The second mould plate 30 may comprise one or more mould cores 31 (not shown in Figs. 3-13) extending outward from a first surface 32 of the second mould plate 30, facing the first surface of the first mould plate 20. An opposite side, second surface 33 of the second mould plate 30 faces away from the first mould plate 20 and the base plate 10, see e.g. Fig. 5. The second mould plate 30 is arranged moveably relative to the first mould plate 20, such that the mould box may be completely closed (clamped together) to allow injection of the melted plastic into a mould cavity formed between the first and second mould plates 20, 30, and such that the mould box 1 may be opened to extracted a moulded object, e.g. similar to the moulded object 100 shown in Fig. 2.

As is the case with the first mould plate 20, described above, the not shown one or more mould cores (and/or further portions of mould cavities) may - in also not shown - further embodiments be formed in one or more cassettes attachable on - or insertable in suitable recesses in e.g. the first surface 32 of the second mould plate 30.

As is the case with the prior art examples described above, the mould box 1 according to the invention may form part of a clamping part 270 of an injection moulding machine 200, in this case however with a single polygonal cross-section main guide rail pillar 40 (instead of the four cylindrical main guide rails 400, shown in Fig. 1) for guiding the movement of the second mould plate 30. The movement of the second mould plate 30 is performed by a linear drive mechanism 280, for example a hydraulic mechanism.

As shown in Figs. 3-13, the main guide rail pillar 40 extends through a second opening 130 in the second mould plate 30. The second opening 130 in the second mould plate 30 is a through-going opening extending all the way through the second mould plate 30.

The second opening 130 in the second mould plate 30 preferably has a cross sectional shape corresponding to the cross-sectional shape of the guide pillar 40 such that the guide pillar 40 may be slidably arranged therein.

As shown in Figs. 3-5 and 6, the main guide rail pillar 40 also may extend through a first opening 120 in the first mould plate 20. The first opening 120 in the first mould plate 20 is a through-going opening extending all the way through the first mould plate 20. The first opening 120 in the first mould plate 20 preferably has a cross sectional shape corresponding to the cross-sectional shape of the guide pillar 40 such that the guide pillar 40 may be received and fixedly anchored.

The main guide rail pillar 40 may have a main body part 41 and flange or protrusion 42 having a larger cross sectional extent than that of the main body part 41, see e.g. Fig.5. In such cases, and as shown in e.g. Fig 4C, the first opening 120 in the first mould plate 20 may comprise one first section 121 configured for receiving a portion of the main body part 41 of the main guide rail pillar 40, and another, second section 122 with a larger cross-sectional extend than the first section 121, and configured for receiving the flange 42 of the main guide rail pillar 40, see e.g. Fig. 4C. The main guide rail pillar 40 at a first end 43 thereof may thereby be provided with a protrusion 41 configured for cooperating with an enlargement 121 of the second opening 120 in the first mould plate 20. Thereby, the main guide rail pillar 40 may be anchored in first opening 120 through the first mould plate 20.

In either case, and as shown in Figs. 3-5 the second opening 130 in the second mould plate 30 is formed centrally in the second mould plate 30. In this case, it follows that the first opening 120 in the first mould plate 20 is also formed centrally in the first mould plate 20.

In other embodiments, and as illustrated in Fig. 6, a single main guide rail may not necessarily have to be arranged through a centrally located opening 120, 130 in each mould plate 20, 30. Fig. 6 illustrates an embodiment, where a single main guide rail pillar 40 is arranged through a second opening 130 in the second mould plate 30, which is located adjacent to a lower edge of the second mould plate 30, and centrally on the lower edge 35. It follows that in such embodiments, the first opening 120 through the first mould plate would be arranged in a similar manner (the first mould plate 20 is not shown in Fig. 6).

The one or more mould cavities may be formed around the first opening 120 in the first mould plate 20. Further, mating mould cores may be formed around the second opening in the movable, second mould plate 30.

Figs.3A-C, in various views, show a mould box 1 according to one embodiment of the invention in a first position, where the first and second mould plates 20, 30 are in close contact and clamped together. This illustrates a position, where plastic may be injected into the (not shown) mould cavity formed between the first and second mould plates 20, 30. Correspondingly, figs. 4A-C show the mould box of Figs. 3A-C in a second position, where the first and second mould plates 20, 30 are separated from each other. This illustrates a position, where moulded objects may be removed from the mould cavity.

In either of the above mentioned cases, the second opening 130 in second mould plate 30 may, as shown, be provided with a bearing 50, such as a slide bearing. In this case the second opening 130 in the second mould plate 30 may be configured to receive the bearing 50.

The bearing 50 comprises a bearing element 51 with inner surfaces configured for contacting against the planar guide surfaces 45', 45", 46', 46" of the main guide rail pillar 40. The bearing 50 may, as shown in Fig. 5, have a main body part 51 and flange 52 having a larger cross sectional extent than that of the main body part 51. In such cases the second opening 130 in the second mould plate 30 may comprise one first section 131 configured for receiving the main body part 51 of the bearing 50, and another, second section 132 with a larger cross-sectional extend than the first section 131, and configured for receiving the flange 52 of the bearing 50, see e.g. Fig. 4C.

As shown in Figs. 3- 6, the main guide rail pillar 40 extends through a third opening 140 formed in the bearing 50. The third opening 140 in the bearing 50 is a through-going opening extending all the way through the bearing 50. The third opening 140 in the bearing 50 preferably has a cross sectional shape corresponding to the cross-sectional shape of the guide pillar 40 such that the guide pillar 40 may be may be slidably arranged therein.

In the embodiment shown in Fig. 7, having two main guide rail pillars 40, a bearing 50 as described above may be provided between each main guide rail pillar and the second mould plate 30.

One problem with such a main guide rail pillar with a polygonal cross-shape is the torsional forces between the one, two of more main guide rail pillars 40 and the second mould plate 30, and possibly further plates slideably arranged on the main guide rail pillar(s) 40. During use, torsional forces are bound to affect the moveable second mould plate 30. Such torsional forces may impart a slight tilting of the second mould plate 30 (and/or further plates) relative to the main guide rail pillar(s) 40. This will result in increased wear of the bearing 50 (between the main guide rail 40 and the mould plate 30) and/or main guide rail 40, and in some cases there is even a risk that the second mould plate 30 will become locked to the main guide rail pillar(s) 40.

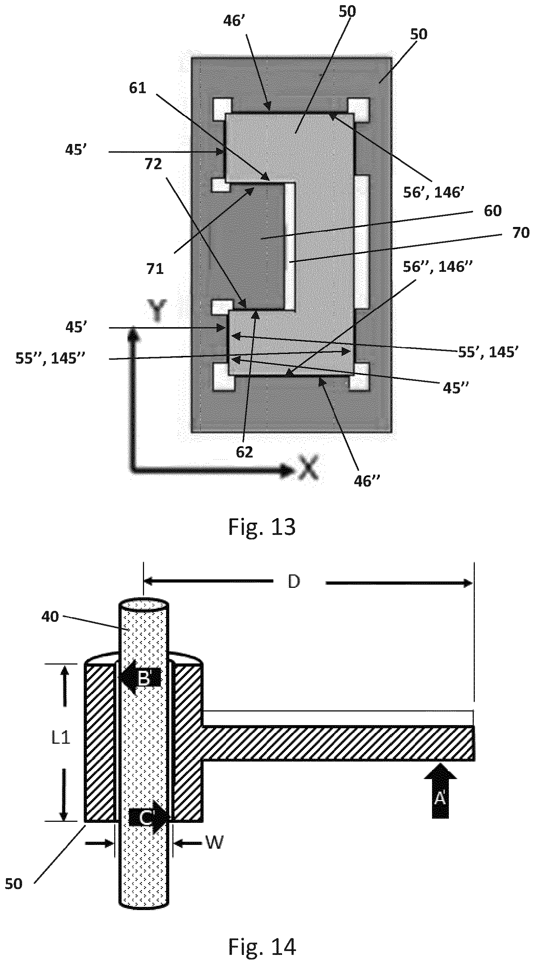

Such a locking effect is illustrated in Fig. 14, in the context of a prior art cylindrical main guide rail pillar 40 with a bearing 50 slidably arranged thereon. If pressure (indicated by arrow A' in Fig.14 is supplied to the bearing (such as through a second mould plate) at a distance D from the main guide rail pillar 40 longitudinal axis, the bearing 50 may tilt slightly relative to the main guide rail pillar 40. As indicated by arrows B' and C' such a slight torsion of the bearing 50 may cause surface portions of the bearing 50 to apply a larger pressure on the main guide rail pillar 40. i.e. it will increase the friction in the Z direction, indicated in the figure at points or locations of the bearing 50. This will increase wear on the bearing surfaces and on the main guide rail pillar 40. In some cases it may even cause the bearing 50 (and thereby the movable second mould plate 30 being locked to the main guide rail pillar 40, which is highly undesirable. This will happen when the frictional forces, in the Z-direction, between the bearing 50 and the main guide rail pillar 40 at the points/locations indicated by arrows B' and C' becomes larger than the forces A' applied in the Z direction. This may be termed a lock effect or locking effect.

In Fig. 14, such a lock effect is explained in connection with a prior art cylindrical main guide rail pillar 40. It will however be appreciated that there is a risk of a similar occurrence of a lock effect (or increased wear) in connection with the polygonal, such as rectangular, main guide rail pillars as described above.

The present invention, decreases this problem.

In one aspect of the invention this may be overcome by the main guide rail pillar(s) 40 having a rectangular cross section with the longer side surfaces being arranged vertically, such as is shown in e.g. Figs. 3-13, where the main guide rail pillar(s) has/have a rectangular cross section with two wider planar guide surfaces 45', 45", and two narrower planar guide surfaces 46', 46". The two wider planar guide surfaces 45', 45" are parallel to each other and formed on opposed sides of the main guide rail pillar 40. Similarly, the two narrower planar guide surfaces 46', 46" are parallel to each other and formed on opposed sides of the main guide rail pillar 40, but perpendicular to the two wider planar guide surfaces 45', 45".

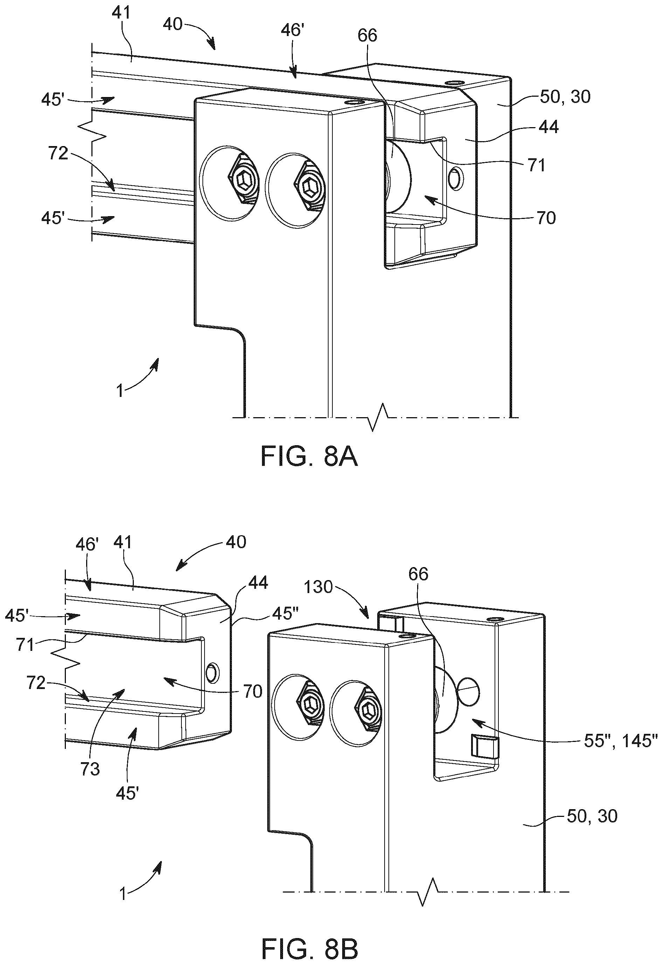

However, it has shown that there may be a need for further guidance for stabilizing the movement of the second mould plate 30 or any other platen moving on the main guide rail pillar 40. A solution to this problem is shown in the Figs. 8-13.

The embodiments shown in Figs. 8-13 also concerns a mould box 1 for an injection moulding machine, such as the injection moulding machine 200 shown in Fig. 1. The mould box 1 also in this case comprises a first mould plate 20 and second mould plate 30, where at least the second mould plate 30 is movably arranged relative to the first mould plate 20 along the longitudinal axis, A, along a main guide rail system 40.

As descried above the main guide rail system is configured for guiding at least the second mould plate 30 linearly away from and towards the first mould plate 20, and the main guide rail system 40' may comprise one or more main guide rail pillar(s) 40, in the same way as described above. Also as described above, each of main guide rail pillar(s) 40 may have a cross section perpendicular to the longitudinal axis (A), which is rectangular.

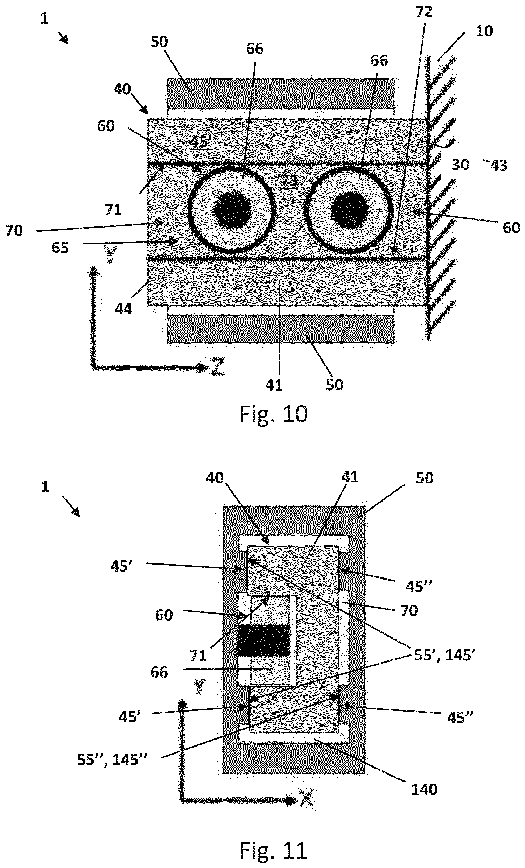

The invention differs from what is described above, by having a guide track 70 formed in a sidewall of the main guide rail pillar 40. The guide track 70 is formed as an elongate indention into one sidewall of the rectangular main guide rail pillar 40. The guide track 70 extends along an entire length of the main guide rail pillar 40 in the longitudinal direction, defined by the longitudinal axis, A, thereof, or at least over a distance, where the second mould plate 30 is intended to be slidably translational. The guide track 70 comprises at least one guide surface, first guide surface 71. The first guide surface 71 can be seen in Fig. 10 and 11. Fig. 10 is a side view of the embodiment shown in Figs.8-9, and Fig. 11 is sectional view through the same.

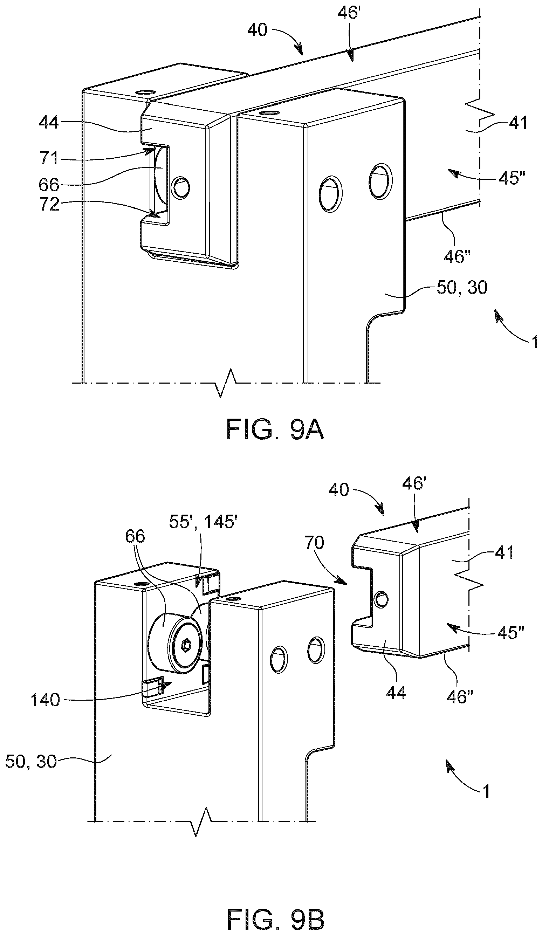

As shown in e.g. Figs. 8A-B and 9A-B, as also described above each main guide rail pillar 40 extends through a third opening 140 formed through a bearing 50 arranged between each main guide rail pillar 40 and the second mould plate 30. In Figs. 8A-B and 9A-B, the bearing 50 is shown in perspective, from two different sides of the rectangular main guide rail pillar 40, respectively. Figs. 8B and 9B shows the main guide rail 30, bearing 50 and second mould plate 30 in an assembled state, where the bearing 50 is slidably arranged on/connected to the main guide rail pillar 40. Figs. 8B, 9B shows the same as Figs 8A, 9A, respectively, but where the main guide rail 30 is disassembled from the bearing 50 and the second mould plate 30.

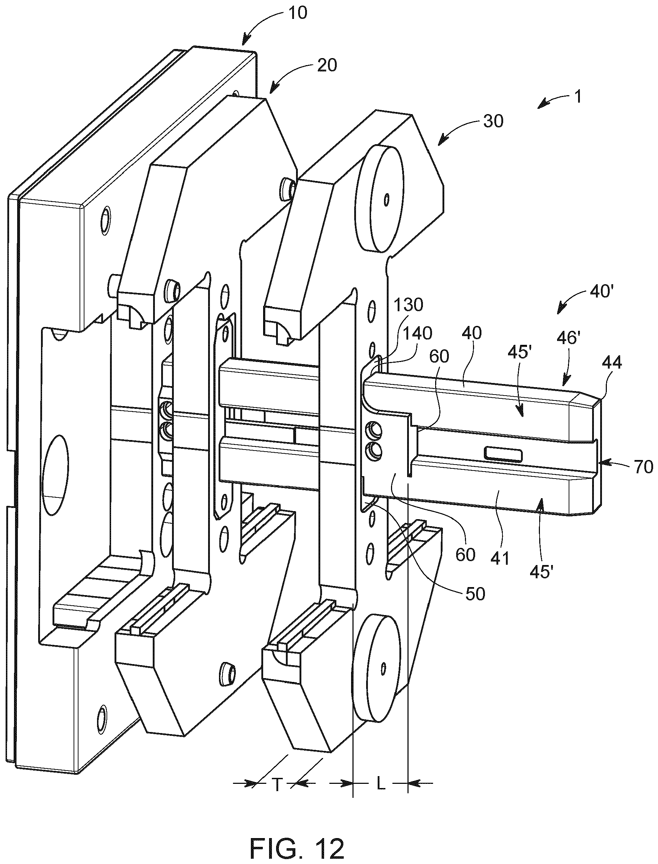

A protruding bearing element 60 extends from the third opening 140 formed in the bearing 50 and into the guide track 70. The protruding bearing element 60 is connected to a bearing element 51 of the bearing 50 or to the second mould plate 30. As shown in Figs. 8-11, the protruding bearing element 60 may be formed by two parallelly arranged rollers 66. Other embodiments of the protruding bearing element 60 will be described below in connection with Figs. 12-13.

Regardless, the protruding bearing element 60 forms a bearing contact against the first guide surface 71 of the guide track 70.

As shown in Figs. 8-9, the main guide rail pillar 40 extends through a third opening 140 through a bearing 50, which may be arranged in a second opening 130 formed through the second mould plate 30, in the same manner as described previously. Thus, in such embodiments, the bearing 50 comprises a separate bearing unit, comprising having a bearing element 51 which is separate from the second mould plate 30. However, in other - not shown embodiments - at least some portions of the bearing 50 arranged between the main guide rail pillar 40 and the second mould plate 30 may be connected directly to portions of the second mould plate 30. For example, the protruding bearing element 60 may be connected directly to the second mould plate 30.

The rectangular cross sectional shape of the main guide rail pillar 40 may - in not shown embodiments - comprise equal side lengths, i.e. the cross sectional shape is square. However, as also described above, and in order to reduce the risk tilting of the second mould plate 30 relative to the main guide rail pillar, the rectangular shape of the main guide rail pillar 40 is oriented such that a longer side of the rectangular shape extends vertically and a shorter side (relative to the vertical sides) of the rectangular shape extends horizontally.

The guide track 70 is preferably, and as shown in all of Figs. 8-13, formed in a sidewall of the main guide rail pillar 40, which is a longer side of the rectangular shape of the cross-section of the main guide rail 40.

As mentioned and as shown in Figs. 8-11, in some embodiment the protruding bearing element comprises a first roller bearing 65 configured for rolling on said first internal guide surface 71 of the guide track 70. The first roller bearing 65 may comprise on or more rollers 66, for example in the form of wheels, cylinders, balls, caterpillars or the like. In Figs. 8-11 the first roller bearing 65 is provided by two rollers 66 in the form of wheels, configured for cooperation with the first internal guide surface 71, which as shown in Figs. 8-11 is arranged horizontally. Thereby, the first internal guide surface 71 of the guide track 70 and the first roller bearing 65 may carry the vertical forces on the second mould plate 30 and the main guide rail pillar 40.

It will be appreciated that is some - not shown -embodiments, the protruding bearing element 60 may in addition to the first roller bearing 65 shown also comprise a comprise a second roller bearing configured for rolling on a second internal guide surface of the guide track 70. The second internal guide surface of the guide track 70 is arranged opposite to and facing the first internal guide surface 71 of the guide track 70. The second roller bearing may - as the first roller bearing 65 - comprise on or more rollers, for example in the form of wheels, cylinders, balls, caterpillars or the like. This would provide an additional bearing contact between the main guide rail pillar 40 and the second mould plate 30 and prevent the two from movement in the vertical direction (Y-direction in Figs. 10, 11, 13).

As an alternative to the one or more roller bearings 65 between the guide track 70 formed in the main guide rail pillar 40 and the protruding bearing element 60 connected to the second mould plate 30, sliding bearings may be provided. Examples of this will be described with reference to Figs. 12 and 13.

In Figs. 12 and 13, the protruding bearing element 60 is formed as a block of material extending from an internal sidewall/side surface of the third opening 140 through the bearing element 51 forming the bearing 50 between the main guide rail pillar and the second mould plate 30. The protruding bearing element 60 comprises a first external bearing surface 61 configured for sliding against the first internal guide surface 71 of the guide track 70.

In this case, as shown in the Figs. 12 and 13, preferably, the first internal guide surface 71 of the guide track 70 and the first external bearing surface 61 are horizontally arranged. Thereby, the first internal guide surface 71 of the guide track 70 and the first external bearing surface 61 may carry the vertical forces on the second mould plate 30.

As it is also shown in Figs. 12 and 13, the protruding bearing element 60 is formed as a block of material extending from an internal sidewall/side surface of the third opening 140 through the bearing element 51 may - in some embodiments additionally or alternatively comprise a second external bearing surface 62 arranged opposite to and facing away from the first external bearing surface 61. Also, the guide track 70 in this instance comprises at least a second internal guide surface 72, which is arranged opposite to and facing the first internal guide surface 71 of the guide track 70. The second external bearing surface 62 is configured for sliding against said second internal guide surface 72 of the guide track 70.

This would provide an additional bearing contact between the main guide rail pillar 40 and the second mould plate 30 and lock the two against movement in the vertical direction.

We note that in as shown and described above, a length, L, of the bearing 50 in the direction along the longitudinal axis, A, coincides with a thickness, T, (illustrated in Fig. 12) of the second mould plate 30. Thus, the ends of the bearing element 50 in such embodiments are flush with the first and second surface 32, 33 of the second mould plate 30.

However, in some embodiments, and as shown in Fig. 12, the bearing element 51 may be provided with a flange 80 extending in the direction along the longitudinal axis, A, and protruding away from the second surface 33 of the second mould plate 30, such that a length of the protruding bearing element 60 and thereby the length of the first and/or second external bearing surfaces 61, 62, may be elongated relative to the previously described embodiment. This will allow to increase the stiffness of the connection between the main guide rail pillar 40 and the second mould plate 30 along the longitudinal axis A, and to thereby counteract torsion/rotation about the X-direction indicated in Fig. 13, i.e. reduce the lock effect described in connection with Fig. 14 above.

We note that even though, such an elongation of the protruding bearing element 60 has been described in connection with a sliding bearing, such as shown in Figs. 12 and 13, a similar elongation of the protruding bearing element 60 may be provided in cases - as described above - with first and/or second roller bearings 65.

Thus, more generally speaking, the protruding bearing element 60 may have a length, L, which is longer than a thickness, T, of the second mould plate 30.

In general, the relationship between the length, L, of the protruding bearing element 60 and the thickness, T, of the second mould plate 30 is adapted to reduce the lock effect. The guide track 70 as such and in particularly in combnation with either additional guide surfaces and/or an increased length L of the bearing, allows thinner mould plates 30 (reduction of T), and thereby to reduce the weight of mould boxes 1.

In one embodiment, the length, L, of the protruding bearing element 60 is twice the thickness, T, of the second mould plate 30.

Above, the bearing connection between the protruding bearing element 60 and the guide track 70 has been described.

In addition thereto it is possible to provide further bearing connections between the outer surfaces of the main guide rail pillar 40 and internal surfaces of the third opening 140 formed through the bearing element 51. This will increase the relative stability of the connection between the main guide rail pillar 40 and the second mould plate 40.

Thus, in some embodiments the bearing 50 further comprises a first internal bearing component 55', 55", 56', 56" arranged in the third opening 140, which is provided through the bearing 50, wherein the first internal bearing component 55', 55", 56', 56" is configured to cooperate with one of the planar guide surface 45', 45", 46', 46" of the main guide rail pillar 40. The first internal bearing component 55', 55", 56', 56" may be a roller bearing comprising on or more rollers 66, for example in the form of wheels, cylinders, balls, caterpillars or the like. In other embodiments the first internal bearing component 55', 55", 56', 56" may be a sliding bearing.

In a preferred embodiment, at least the first internal bearing component 55' of the bearing 50 cooperates with a first planar guide surface 45', 45", which is perpendicular to the first guide surface 71 of the guide track 70. Thereby the bearing provides support in the horizontal plane.

In one embodiment thereof, the first internal bearing component 55' comprises a first internal bearing surface 145' configured for sliding against the planar guide surface 45', of the main guide rail pillar 40. This is shown in Fig. 11 and in Fig. 13. Alternatively, the first internal bearing component 55' may comprise a roller bearing connection (not shown).

In a further embodiment the bearing 50 may additionally comprises a second internal bearing component 55" arranged in the third opening 140 through the bearing 50. The second internal bearing component 55" is configured to cooperate with another one of the planar guide surfaces, second planar guide surface 45" of the main guide rail pillar 40. The second planar guide surface 45" is also perpendicular to the first guide surface 71 of the guide track 70. The second internal bearing component 55" is arranged opposite to and facing the first internal bearing component 55'. Thereby, the second mould plate 30 is prevented from movement relative to the main guide rail pillar 40 in the horizontal direction (along X in Fig. 13).

In one embodiment hereof, the second internal bearing component 55" comprises a second internal bearing surface 145" configured for sliding against the second planar guide surface 45" of the main guide rail pillar 40, as shown in Fig. 11 and Fig. 13. Alternatively, the second internal bearing component 55" may comprise a roller bearing connection (not shown).

In some further embodiments, the bearing 50 may further comprise a third internal bearing component 56' arranged in the third opening 140 through the bearing 50. The third internal bearing component 56' is configured to cooperate with another one of the planar guide surfaces 46' of the main guide rail pillar 40, which is parallel to the first guide surface 71 of the guide track 70. This may support the bearing connection between the main guide rail pillar 40 and the second mould plate 30 in the same direction as the bearing contact between the protruding bearing element 60 and the first guide surface 71 of the guide track 70.

In an embodiment hereof, the third internal bearing component 56' comprises a third internal bearing surface 146', 146" configured for sliding against the third planar guide surface 46' of the main guide rail pillar 40, as shown in Fig. 13. Alternatively, the third internal bearing component 56' may comprise a roller bearing connection (not shown).

Additionally, in a further embodiment, the bearing 50 may comprise a fourth internal bearing component 56", also arranged in the third opening 140 through the bearing 50. The fourth internal bearing component 56" is configured to cooperate with a fourth planar guide surfaces 46" of the main guide rail pillar (40), which is parallel to the third planar guide surfaces 46' and facing in the opposite direction thereto. This may prevent the bearing connection between the main guide rail pillar 40 and the second mould plate 30 from movement in the same direction as the bearing contact between the protruding bearing element 60 and the first guide surface 71 of the guide track 70, i.e. the vertical direction, which is the Y-direction in Fig. 13.

In an embodiment hereof, the fourth internal bearing component 56" comprises a fourth internal bearing surface 146" configured for sliding against the fourth planar guide surface 46" of the main guide rail pillar 40 as shown in Fig. 13. Alternatively, the fourth internal bearing component 56" may comprise a roller bearing connection (not shown).

We note that in any of the embodiments where the main guide rail pillar 40 is described with a guide track (Figs. 8-13), the main guide rail system 40' of the mould box 1 may comprises a first main guide rail pillar 40, and second main guide rail pillar 40, in the same manner as shown in Fig. 7, where each of the first and second main guide rail pillars 40 has a rectangular cross section perpendicular to the longitudinal axis, A.

Thus, in further embodiments thereof, the first main guide rail pillar 40 extends through an opening 130 in the second mould plate 30, where said opening 130 through the second mould plate 30 is formed centrally adjacent to an upper edge 34 of the second mould plate 30, and the second main guide rail pillar 40 extends through another opening 130 in the second mould plate 30, which opening is formed centrally adjacent to a lower edge 35 of the second mould plate 30.

However, alternatively, the main guide rail system 40' of the mould box 1 comprises a single main guide rail pillar 40 only, such as shown in Figs. 3-6. In this case, preferably, the single main guide rail pillar 40 extends through a second opening 130 in the second mould plate 30, which said opening 130 through the second mould plate 30 is formed centrally in the second mould plate 30.

As is also apparent from the above description, the mould box 1 according to the invention may be utilized in an injection moulding machine as discussed above. Thus in a further aspect the invention relates to an injection moulding machine 200 comprising
- a mount 201;
- a mould box 1 according to any one of the embodiments disclosed above;
- a linear drive mechanism 280 for moving the second mould plate 30; and
- an injection part 210,
wherein the second mould plate 30 is movably arranged relative to the first mould plate 20, and driven by the linear drive mechanism 280.

Where, in the Figs. 3-5 embodiments the first and second mould plates 20, 30 are rectangular or quadratic in shape, the first and seconds mould plate 20, 30 as well as the base plate 10 in the Fig. 12 embodiment have more complex shapes. The bas plate 10 and the first and second mould plates 20, 30 show openings 16, 26, 36 wherein cassettes with runner channels, mould cavities and mould cores, respectively may be inserted sideways into holders of the plates.

It is to be noted that the figures and the above description have shown the example embodiments in a simple and schematic manner. Many of the specific mechanical details have not been shown since the person skilled in the art should be familiar with these details and they would just unnecessarily complicate this description.

### List of parts

- 1: mould box
- 10: base plate
- 20: first mould plate
- 21: mould cavity formed in a first mould plate
- 22: first surface of the first mould plate 20
- 23: second surface or side of the first mould plate, opposite to the first surface, and facing the base plate,
- 24: openings provided in the first mould plate for receiving main guide rails
- 30: second mould plate
- 31: core, mould core
- 32: first surface of the second mould plate, facing the first surface of the first mould plate
- 33: second surface of the second mould plate facing away from the first mould plate and the base plate, and arranged opposite to the first surface of the second mould plate
- 34: upper edge of the second mould plate
- 35: lower edge of the second mould plate
- 40: main guide rail pillar, elongate main guide rail pillar
- 41: elongate, main body part of main guide rail pillar,
- 42: flange or protrusion of main guide rail pillar having a larger cross sectional extent than that of the main body part, and formed at first end of main guide rail pillar
- 43: first end of main guide rail pillar
- 44: second end of main guide rail pillar, opposite to first end
- 45': planar guide surface, first planar guide surface of main guide rail pillar
- 45": planar guide surface, second planar guide surface of main guide rail pillar
- 46': planar guide surface, third planar guide surface of main guide rail pillar
- 46": planar guide surface, fourth planar guide surface of main guide rail pillar
- 50: bearing arranged between main guide rail pillar and the second mould plate
- 51: bearing element arranged between main guide rail pillar and the second mould plate
- 55: first internal bearing component of the bearing and arranged in the third opening through the bearing
- 60: protruding bearing element of the bearing arranged between main guide rail pillar and the second mould plate
- 61: first external bearing surface of the protruding bearing element
- 62: second external bearing surface of the protruding bearing element
- 65: first roller bearing
- 66: roller
- 70: guide track formed in a sidewall of the main guide rail pillar
- 71: first internal guide surface of the guide track
- 72: second internal guide surface of the guide track formed opposite to and facing the first internal guide surface of the guide track
- 73: third internal guide surface of the guide track
- 100: moulded object
- 105: plastic granules
- 120: opening, first opening, formed through the first mould plate
- 130: opening, second opening, formed through the second mould plate, and for receiving main guide rail pillar
- 140: third opening formed through the bearing 50
- 200: injection moulding machine
- 201: mount of injection moulding machine
- 210: injection part of injection moulding machine
- 220: reciprocating screw
- 225: nozzle
- 226: sprue channels in base plate
- 230: drive mechanism for rotating reciprocating screw
- 240: hopper
- 250: heating devices surrounding the reciprocating screw
- 260: barrel of a reciprocating screw of the injection part
- 270: clamping part of injection moulding machine
- 280: linear drive mechanism
- 290: moveable platen
- 400: cylindrical main guide rails
- A: longitudinal axis of main guide rail pillar
- L: length of the protruding bearing element
- T: thickness of the second mould plate

## Claims

1. A mould box (1) for an injection moulding machine (200), the mould box (1) comprising
- a first mould plate (20);
- a second mould plate (30) movably arranged relative to the first mould plate (20) along a longitudinal axis (A); and
- a main guide rail system (40') configured for guiding at least the second mould plate linearly away from and towards the first mould plate (20),
wherein the main guide rail system (40') comprises a main guide rail pillar (40), having a cross section perpendicular to the longitudinal axis (A),
wherein the cross-section is rectangular,
wherein the main guide rail pillar (40) extends through a third opening (140) through a bearing (50) arranged between the main guide rail pillar (40) and the second mould plate (30);
wherein a guide track (70) is formed as an elongate indention in a sidewall of the main guide rail pillar (40) and comprising a first internal guide surface (71); and
wherein a protruding bearing element (60) extends from the third opening (140) in the bearing (50) and into the guide track (70), and forming a bearing contact against the first guide surface (71) of the guide track (70).

2. A mould box (1) according to claim 1, wherein the rectangular shape of the main guide rail pillar (40) is oriented such that a longer side of the rectangular shape extends vertically and a shorter side of the rectangular shape extends horizontally.

3. A mould box (1) according to claim 1 or 2, wherein the guide track (70) is formed in a sidewall of the main guide rail pillar (40) which is a longer side of the rectangular shape of the cross-section of the main guide rail (40).

4. A mould box (1) according to any one of the claims 1-3, wherein the protruding bearing element (60) has a length (L) which is longer than a thickness (T) of the second mould plate (30).

5. A mould box (1) according to any one of the claims 1-4, wherein the protruding bearing element (60) comprises a first roller bearing (65) configured for rolling on said first internal guide surface (71) of the guide track (70).

6. A mould box (1) according to any one of the claims 1-4, wherein the protruding bearing element (60) comprises a first external bearing surface (61) configured for sliding against said first internal guide surface (71) of the guide track (70).

7. A mould box (1) according claim 6, wherein the guide track (70) comprises at least a second internal guide surface (72) arranged opposite to and facing the first internal guide surface (71); and wherein the protruding bearing element (60) comprises a second external bearing surface (62) configured for sliding against said second internal guide surface (72) of the guide track (70).

8. A mould box (1) according to any one of the claims 1-7, wherein the bearing (50) further comprises a first internal bearing component (55', 55", 56', 56") arranged in the third opening (140) through the bearing (50), wherein the first internal bearing component is configured to cooperate with one planar guide surface (45', 45", 46', 46") of the main guide rail pillar (40).

9. A mould box (1) according to claim 8, wherein the first internal bearing component (55') of the bearing (50) cooperates with a first planar guide surface (45', 45"), which is perpendicular to the first guide surface (71) of the guide track (70).

10. A mould box (1) according to claim 9, wherein the bearing (50) further comprises a third internal bearing component (56', 56") arranged in the third opening (140) through the bearing (50), wherein the third internal bearing component (56', 56") is configured to cooperate with another one of the planar guide surfaces (46', 46") of the main guide rail pillar (40), which is parallel to the first guide surface (71) of the guide track (70).

11. An injection moulding machine comprising
- a mount (201);
- a mould box (1) according to any one of the claims 1-10;
- a linear drive mechanism (280) for moving the second mould plate (30); and
- an injection part (210),
wherein the second mould plate (30) is movably arranged relative to the first mould plate (20), and driven by the linear drive mechanism (280).

## Patentansprüche

1. Formkasten (1) für eine Spritzgießmaschine (200), wobei der Formkasten (1) umfasst
- eine erste Formplatte (20);
- eine zweite Formplatte (30), die relativ zur ersten Formplatte (20) entlang einer Längsachse (A) beweglich angeordnet ist; und
- ein Hauptführungsschienensystem (40'), das zum Führen mindestens der zweiten Formplatte linear von der ersten Formplatte (20) weg und zu dieser hin konfiguriert ist, wobei das Hauptführungsschienensystem (40') einen Hauptführungsschienenpfeiler (40) umfasst, der einen Querschnitt senkrecht zur Längsachse (A) aufweist,
wobei der Querschnitt rechteckig ist,
wobei sich der Hauptführungsschienenpfeiler (40) durch eine dritte Öffnung (140) durch ein Lager (50) erstreckt, das zwischen dem Hauptführungsschienenpfeiler (40) und der zweiten Formplatte (30) angeordnet ist;
wobei eine Führungsspur (70) als eine längliche Einrückung in einer Seitenwand des Hauptführungsschienenpfeilers (40) gebildet ist und eine erste innere Führungsfläche (71) umfasst; und
wobei sich ein vorspringendes Lagerelement (60) aus der dritten Öffnung (140) im Lager (50) und in die Führungsspur (70) erstreckt und dabei einen Lagerkontakt an der ersten Führungsfläche (71) der Führungsspur (70) bildet.

2. Formkasten (1) nach Anspruch 1, wobei die rechteckige Form des Hauptführungsschienenpfeilers (40) so ausgerichtet ist, dass eine längere Seite der rechteckigen Form sich vertikal erstreckt und eine kürzere Seite der rechteckigen Form sich horizontal erstreckt.

3. Formkasten (1) nach Anspruch 1 oder 2, wobei die Führungsspur (70) in einer Seitenwand des Hauptführungsschienenpfeilers (40) gebildet ist, die eine längere Seite der rechteckigen Form des Querschnitts der Hauptführungsschiene (40) ist.

4. Formkasten (1) nach einem der Ansprüche 1-3, wobei das vorspringende Lagerelement (60) eine Länge (L) aufweist, die länger ist als eine Dicke (T) der zweiten Formplatte (30).

5. Formkasten (1) nach einem der Ansprüche 1-4, wobei das vorspringende Lagerelement (60) ein erstes Rollenlager (65) umfasst, das zum Rollen auf der ersten inneren Führungsfläche (71) der Führungsspur (70) konfiguriert ist.

6. Formkasten (1) nach einem der Ansprüche 1-4, wobei das vorspringende Lagerelement (60) eine erste äußere Lagerfläche (61) umfasst, die zum Gleiten an der ersten inneren Führungsfläche (71) der Führungsspur (70) konfiguriert ist.

7. Formkasten (1) nach Anspruch 6, wobei die Führungsspur (70) mindestens eine zweite innere Führungsfläche (72) umfasst, die der ersten inneren Führungsfläche (71) gegenüberliegend angeordnet, und dieser zugewandt ist; und wobei das vorspringende Lagerelement (60) eine zweite äußere Lagerfläche (62) umfasst, die zum Gleiten an der zweiten inneren Führungsfläche (72) der Führungsspur (70) konfiguriert ist.

8. Formkasten (1) nach einem der Ansprüche 1-7, wobei das Lager (50) weiter eine erste innere Lagerkomponente (55', 55", 56', 56") umfasst, die in der dritten Öffnung (140) durch das Lager (50) angeordnet ist, wobei die erste innere Lagerkomponente konfiguriert ist, um mit einer ebenen Führungsfläche (45', 45", 46', 46") des Hauptführungsschienenpfeilers (40) zusammenzuwirken.

9. Formkasten (1) nach Anspruch 8, wobei die erste innere Lagerkomponente (55') des Lagers (50) mit einer ersten ebenen Führungsfläche (45', 45") zusammenwirkt, die zur ersten Führungsfläche (71) der Führungsspur (70) senkrecht ist.

10. Formkasten (1) nach Anspruch 9, wobei das Lager (50) weiter eine dritte innere Lagerkomponente (56', 56") umfasst, die in der dritten Öffnung (140) durch das Lager (50) angeordnet ist, wobei die dritte innere Lagerkomponente (56', 56") konfiguriert ist, um mit einer anderen der ebenen Führungsflächen (46', 46") des Hauptführungsschienenpfeilers (40) zusammenzuwirken, die zur ersten Führungsfläche (71) der Führungsspur (70) parallel ist.

11. Spritzgießmaschine, umfassend
- eine Halterung (201);
- einen Formkasten (1) nach einem der Ansprüche 1-10;
- einen Linearantriebsmechanismus (280) zum Bewegen der zweiten Formplatte (30); und
- einen Spritzteil (210),
wobei die zweite Formplatte (30) relativ zur ersten Formplatte (20) beweglich angeordnet ist, und vom Linearantriebsmechanismus (280) angetrieben wird.

## Revendications

1. Châssis de moulage (1) pour une machine de moulage par injection (200), le châssis de moulage (1) comprenant
- une première plaque de moule (20) ;
- une seconde plaque de moule (30) agencée de manière mobile par rapport à la première plaque de moule (20) le long d'un axe longitudinal (A) ; et
- un système de rail de guidage principal (40') configuré pour guider au moins la seconde plaque de moule de manière linéaire en s'éloignant et en direction de la première plaque de moule (20), dans lequel le système de rail de guidage principal (40') comprend un montant de rail de guidage principal (40), présentant une section transversale perpendiculaire à l'axe longitudinal (A),
dans lequel la section transversale est rectangulaire,
dans lequel le montant de rail de guidage principal (40) s'étend à travers une troisième ouverture (140) à travers un palier (50) agencé entre le montant de rail de guidage principal (40) et la seconde plaque de moule (30) ;
dans lequel une piste de guidage (70) est formée sous la forme d'une indentation allongée dans une paroi latérale du montant de rail de guidage principal (40) et comprenant une première surface de guidage interne (71) ; et
dans lequel un élément de palier saillant (60) s'étend depuis la troisième ouverture (140) dans le palier (50) et dans la piste de guidage (70), et formant un contact de palier contre la première surface de guidage (71) de la piste de guidage (70).

2. Châssis de moulage (1) selon la revendication 1, dans lequel la forme rectangulaire du montant de rail de guidage principal (40) est orientée de sorte qu'un côté plus long de la forme rectangulaire s'étende verticalement et qu'un côté plus court de la forme rectangulaire s'étende horizontalement.

3. Châssis de moulage (1) selon la revendication 1 ou 2, dans lequel la piste de guidage (70) est formée dans une paroi latérale du montant de rail de guidage principal (40) qui est un côté plus long de la forme rectangulaire de la section transversale du rail de guidage principal (40).

4. Châssis de moulage (1) selon l'une quelconque des revendications 1-3, dans lequel l'élément de palier saillant (60) présente une longueur (L) qui est plus longue qu'une épaisseur (T) de la seconde plaque de moule (30).

5. Châssis de moulage (1) selon l'une quelconque des revendications 1-4, dans lequel l'élément de palier saillant (60) comprend un premier palier à rouleaux (65) configuré pour rouler sur ladite première surface de guidage interne (71) de la piste de guidage (70).

6. Châssis de moulage (1) selon l'une quelconque des revendications 1-4, dans lequel l'élément de palier saillant (60) comprend une première surface de palier externe (61) configurée pour glisser contre ladite première surface de guidage interne (71) de la piste de guidage (70).

7. Châssis de moulage (1) selon la revendication 6, dans lequel la piste de guidage (70) comprend au moins une seconde surface de guidage interne (72) agencée à l'opposé et face à la première surface de guidage interne (71) ; et dans lequel l'élément de palier saillant (60) comprend une seconde surface de palier externe (62) configurée pour glisser contre ladite seconde surface de guidage interne (72) de la piste de guidage (70).

8. Châssis de moulage (1) selon l'une quelconque des revendications 1-7, dans lequel le palier (50) comprend en outre un premier composant de palier interne (55', 55", 56', 56") agencé dans la troisième ouverture (140) à travers le palier (50), dans lequel le premier composant de palier interne est configuré pour coopérer avec une surface de guidage plane (45', 45", 46', 46") du montant de rail de guidage principal (40).

9. Châssis de moulage (1) selon la revendication 8, dans lequel le premier composant de palier interne (55') du palier (50) coopère avec une première surface de guidage plane (45', 45"), qui est perpendiculaire à la première surface de guidage (71) de la piste de guidage (70).

10. Châssis de moulage (1) selon la revendication 9, dans lequel le palier (50) comprend en outre un troisième composant de palier interne (56', 56") agencé dans la troisième ouverture (140) à travers le palier (50), dans lequel le troisième composant de palier interne (56', 56") est configuré pour coopérer avec une autre des surfaces de guidage planes (46', 46") du montant de rail de guidage principal (40), qui est parallèle à la première surface de guidage (71) de la piste de guidage (70).

11. Machine de moulage par injection comprenant
- une monture (201) ;
- un châssis de moulage (1) selon l'une quelconque des revendications 1-10 ;
- un mécanisme d'entraînement linéaire (280) pour déplacer la seconde plaque de moule (30) ; et
- une partie d'injection (210),
dans laquelle la seconde plaque de moule (30) est agencée de manière mobile par rapport à la première plaque de moule (20) et entraînée par le mécanisme d'entraînement linéaire (280).
